# EUROPEAN PATENT APPLICATION

(11) **EP 3 849 201 A1**
(43) Date of publication of application: **14.07.2021**
(21) Application number: 20181989.3
(22) Date of filing: 24.06.2020
(51) Int. Cl.: H04N 21/414, H04N 21/41, H04N 21/436, H04N 21/236, H04N 21/2381

(54) **MULTI-DIMENSIONAL MEDIA DATA TRANSMISSION METHOD AND APPARATUS, ELECTRONIC DEVICE, AND STORAGE MEDIUM**

(30) Priority: 08.01.2020 CN 202010017667
(71) Applicant: Beijing Xiaomi Mobile Software Co., Ltd., Beijing 100085 (CN)
(72) Inventor: HE, Li, Beijing, 100085 (CN)
(74) Representative: Hughes, Andrea Michelle

(57) **Abstract**

The present disclosure provides a multi-dimensional media data transmission method and an apparatus, an electronic device, and a storage medium. The method includes: acquiring (201) function types of multi-dimensional media data to be transmitted, in which the media data of different dimensions correspond to different function types; determining (202) an electronic device for outputting media data corresponding to a function type; packaging (203) the media data corresponding to the function type according to a communication protocol type of the electronic device, and transmitting the packaged media data through a communication interface corresponding to the electronic device. In the embodiment, the media data is packaged according to the communication protocol type of the electronic device, and the media data of various dimensions is transmitted, which is beneficial to use a common interface to transmit the multi-dimensional media data, and convenient for extending electronic devices, such as sharing hardware resources or developing upper layer application software, thus a good open source software and hardware ecological environment is established.

## Description

### TECHNICAL FIELD

The present disclosure relates to a field of data transmission technologies, and more particularly, to a multi-dimensional media data transmission method and a multi-dimensional media data transmission apparatus, an electronic device, and a storage medium.

### BACKGROUND

With the popularity of four-dimensional (4D) theaters, five-dimensional (5D) theaters have developed on the basis of 4D theaters. 5D theaters can perfectly integrate vision, hearing, smell, touch, and motion. When watching a movie, audiences can not only "touch" objects in the movie, but also "encounter" scenes of wind, rain, and thunder-and-lightning, so that the experience is immersive.

Currently, each manufacturer has its own solution in designing 5D theaters. The solutions of various manufacturers include different central control units, peripheral interfaces and supporting hardware and software equipment. Since these solutions are relatively closed and generally incompatible with each other, once the design is completed, there may be a problem that some hardware resources or upper-layer application software cannot be shared, which is not conducive to the extension of 5D theaters.

### SUMMARY

Embodiments of the present disclosure provide a multi-dimensional media data transmission method and a multi-dimensional media data transmission apparatus, an electronic device, and a storage medium, to provide improvements over the prior art.

In a first aspect of the embodiments of the present disclosure, a multi-dimensional media data transmission method is provided. The method includes: acquiring a plurality of function types of multi-dimensional media data to be transmitted, in which the media data of different dimensions correspond to different function types; determining an electronic device for outputting media data corresponding to a function type; and packaging the media data corresponding to the function type according to a communication protocol type of the electronic device, and transmitting the packaged media data through a communication interface corresponding to the external device.

Alternatively, determining the electronic device for outputting the media data corresponding to the function type, includes: sending an external device query instruction carrying a function type identifier to a registration management module; receiving an external device list feedback by the registration management module based on the function type identifier; and determining at least one external device in the external device list as the external device for outputting the media data corresponding to the function type. The external device for outputting the media data corresponding to the function type is registered with the registration management module in advance.

Alternatively, the external device list carries external device identifiers and communication protocol types corresponding to the function type. Determining the external device for outputting the media data corresponding to the function type, includes: determining a preset communication protocol type from the communication protocol types corresponding to the function type; and determining the external device for outputting the media data corresponding to the function type according to an external device identifier corresponding to the preset communication protocol type.

Alternatively, determining the external device for outputting the media data corresponding to the function type, includes: determining an external device historically used for transmitting the multimedia data corresponding to the function type as the external device for transmitting the multimedia data corresponding to the function type in this transmission according to a historical query result.

Alternatively, packaging the media data corresponding to the function type according to the communication protocol type of the electronic device includes: generating a pack header for the media data according to the function type, the communication protocol type, and the preset communication protocol type; and adding the pack header to the media data and transmitting the packed media data to the communication interface corresponding to the external device.

In a second aspect of the embodiments of the present disclosure, a multi-dimensional media data transmission apparatus is provided. The apparatus includes: a function type acquisition module, configured to acquire a plurality of function types of multi-dimensional media data to be transmitted, in which the media data of different dimensions correspond to different function types; an external device determination module, configured to determine an external device for outputting media data corresponding to a function type; and a media data packaging module, configured to package the media data corresponding to the function type according to a communication protocol type of the electronic device, and to transmit the packaged media data through a communication interface corresponding to the external device.

Alternatively, the external device determination module, includes: a query instruction sending unit, configured to send an external device query instruction carrying a function type identifier to a registration management module; a device list receiving unit, configured to receive an external device list feedback by the registration management module based on the function type identifier; and an external device determining unit, configured to determine at least one external device in the external device list as the external device for outputting the media data corresponding to the function type. The external device for outputting the media data corresponding to the function type is registered with the registration management module in advance.

Alternatively, the external device list carries external device identifiers and communication protocol types corresponding to the function type; and the external device determining module includes: a protocol type determining unit, configured to determine a preset communication protocol type from the communication protocol types corresponding to the function type; and a device identifier determining unit, configured to determine the external device for outputting the media data corresponding to the function type according to an external device identifier corresponding to the preset communication protocol type.

Alternatively, the external device determining module includes: a device determining unit, configured to determine an external device historically used for transmitting the multimedia data corresponding to the function type as the external device for transmitting the multimedia data corresponding to the function type in this transmission according to a historical query result.

Alternatively, the media data packaging module includes: a pack header obtaining unit, configured to generate a pack header for the media data according to the function type, the communication protocol type, and a preset communication protocol type; and a media data transmitting unit, configured to add the pack header to the media data and to transmit the packed media data to the corresponding communication interface corresponding to the external device.

In a third aspect of the embodiments of the present disclosure, an electronic device is provided. The electronic device includes a processor and a memory configured to store instructions executable by the processor. The processor is configured to execute the instructions stored in the memory to implement the method according to any one of the above embodiments.

In a fourth aspect of the embodiments of the present disclosure, a readable storage medium is provided. The storage medium has executable instructions stored thereon that, when executed by a processor, implement the method according to any one of the above embodiments.

The technical solutions provided by the embodiments of the present disclosure may include the following beneficial effects.

With the above embodiments, the function types of multi-dimensional media data to be transmitted are obtained, in which the media data of different dimensions correspond to different function types, the external device for outputting the media data corresponding to the function type is determined, the media data corresponding to the function type is packaged according to the communication protocol type of the electronic device and transmitted through the communication interface corresponding to the external device. In the embodiments, the media data is packaged according to the communication protocol type of the external device, and the media data of various dimensions is transmitted, which is beneficial to use a common interface to transmit multi-dimensional media data, and convenient for extending the external device, such as sharing hardware resources or developing upper layer application software, thus a good open source software and hardware ecological environment is established.

It is understood that the above general description and the following detailed description are only exemplary and explanatory, and do not limit the present disclosure.

### BRIEF DESCRIPTION OF THE DRAWINGS

The accompanying drawings, which are incorporated in and constitute a part of this specification, illustrate embodiments consistent with the present disclosure and, together with the description, serve to explain the principles of the present disclosure.
FIG. 1 is a schematic diagram illustrating an application scenario according to an exemplary embodiment.
FIG. 2 is a flowchart of a multi-dimensional media data transmission method according to an exemplary embodiment.
FIG. 3 is a flowchart of determining an external device according to an exemplary embodiment.
FIG. 4 is a flowchart of determining an external device according to another exemplary embodiment.
FIG. 5 is a flowchart of a multi-dimensional media data transmission method according to another exemplary embodiment.
FIG. 6 to FIG. 10 are block diagrams illustrating a multi-dimensional media data transmission apparatus according to an exemplary embodiment.
FIG. 11 is a block diagram of an electronic device according to an exemplary embodiment.

### DETAILED DESCRIPTION

Reference will now be made in detail to exemplary embodiments, examples of which are illustrated in the accompanying drawings. The following description refers to the accompanying drawings in which the same numbers in different drawings represent the same or similar elements unless otherwise represented. The implementations set forth in the following description of exemplary embodiments do not represent all implementations consistent with the present disclosure. Instead, they are merely examples of apparatuses and methods consistent with aspects related to the present disclosure as recited in the appended claims.

With the popularity of 4D theaters, 5D theaters have developed on the basis of 4D theaters. 5D theaters can perfectly integrate vision, hearing, smell, touch and motion. When watching a movie, audiences can not only "touch" objects in the movie, but also "encounter" scenes of wind, rain, and thunder-and-lightning, so that the experience is immersive.

Currently, each manufacturer has its own solution in designing 5D theaters. The solutions of various manufacturers include different central control units, peripheral interfaces and supporting hardware and software equipment. Since these solutions are relatively closed and generally incompatible with each other, once the design is completed, there may be a problem that some hardware resources or upper-layer application software cannot be shared, which is not conducive to the extension of 5D theaters.

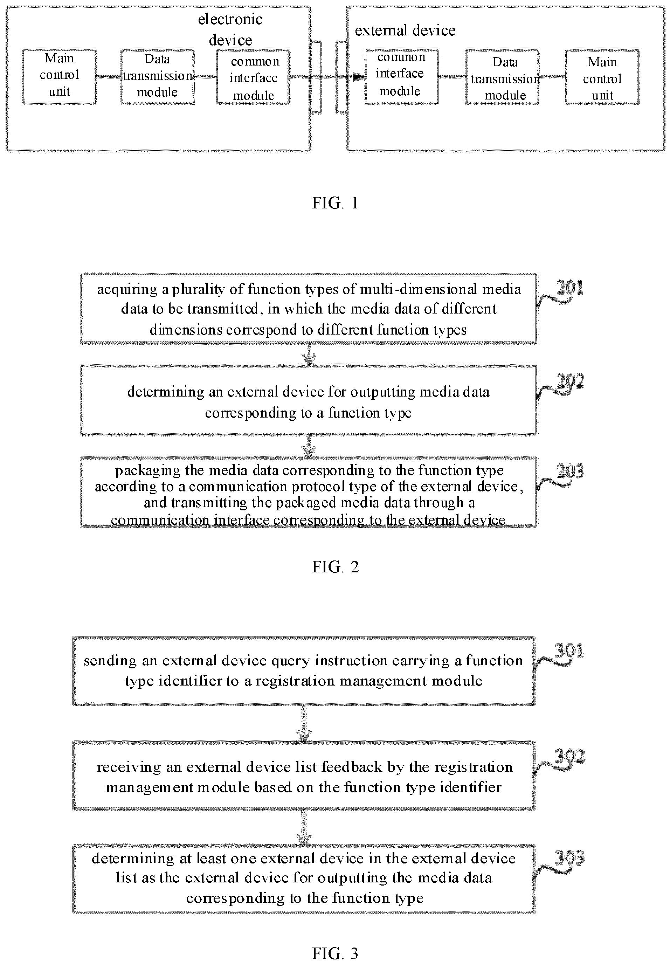

To solve the above technical problems, the embodiments of the present disclosure provide a multi-dimensional media data transmission method, which is applicable for an electronic device provided with a communication interface, such as a television, a speaker, a seat, and the like. The communication interface may be communication interfaces such as a USB interface or an infrared communication interface. FIG. 1 is a schematic diagram illustrating an application scenario according to an exemplary embodiment. The electronic device may send multi-dimensional media data to an external electronic device (hereinafter referred to as an external device to be distinguished), so that the external device can perform corresponding operations, such as example, display, sound, vibration, and the like. The dimensions of the multi-dimensional media data may be at least one of vision, hearing, smell, touch and motion. Those skilled in the art can adjust the dimensions of the media data according to a specific scenario, and the corresponding solution falls within the protection scope of the present disclosure.

In this embodiment, both the electronic device and the external device are provided with a driving module, and the driving module can be implemented by software or hardware. Taking software implementation as an example, the drive module may be provided inside a main control module or a communication interface, or may exist separately as one module. Either way, the solution falls within the protection scope of the present disclosure. In subsequent embodiments, the driving module is separately provided for convenience of description.

FIG. 2 is a flowchart of a multi-dimensional media data transmission method according to an exemplary embodiment. As illustrated in FIG. 2, the multi-dimensional media data transmission method includes actions at blocks 201-203.

At block 201, a plurality of function types of multi-dimensional media data to be transmitted is acquired, in which the media data of different dimensions correspond to different function types.

In an embodiment of the present disclosure, a main control module in the electronic device may acquire the multi-dimensional media data to be transmitted in response to upper-layer applications, for example, when a user watches videos or plays audios. The multi-dimensional media data is parsed to obtain the function types of media data in respective dimensions. The function type may be one of vision, hearing, smell, touch and motion. Certainly, those skilled in the art may set the function types according to specific scenarios, which is not limited here.

In an embodiment of the present disclosure, each function type corresponds to one preset communication protocol. For example, for five-dimensional (5D) multi-dimensional media data, the preset communication protocol types correspond to the data of five dimensions, i.e., data of video, audio, smell, touch, and dynamic, are Video_5D, Audio_5D, Smell_5D, Touch_5D, and Dynamic_5D respectively. In an embodiment of the present disclosure, the preset communication protocol may be understood as a standard format of various industries under the current circumstances, so that the user does not need to define his own data format, which is conducive to subsequent extension.

In an embodiment of the present disclosure, after acquiring a function type of data of a dimension in the multi-dimensional media data, the main control module may send a preset communication protocol type corresponding to the function type as a control instruction to a drive module, to inform the drive module that there is media data of the function type corresponding to the preset communication protocol type that needs to be sent.

At step 202, an external device for outputting media data corresponding to a function type is determined.

In an embodiment of the present disclosure, as illustrated in FIG. 3, the electronic device may send an external device query instruction carrying a function type identifier to a registration management module (corresponding to an action at block 301). Then, an external device list feedback by the registration management module based on the function type identifier may be received (corresponding to an action at block 302). Afterwards, at least one external device in the external device list may be determined as the external device for outputting the media data corresponding to the function type, in which the external device for outputting the media data corresponding to the function type is registered with the registration management module in advance (corresponding to an action at block 303).

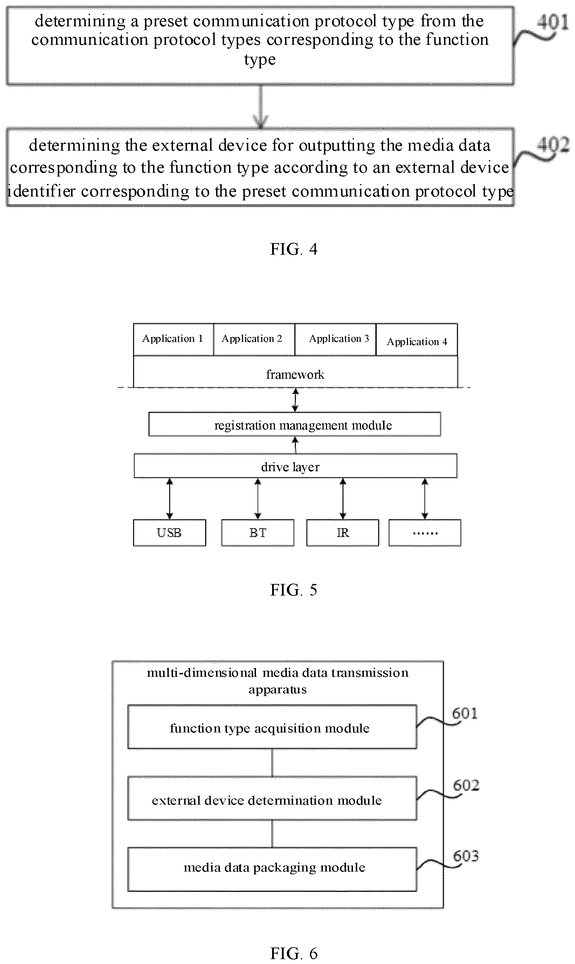

In another embodiment, the external device list carries external device identifiers and communication protocol types corresponding to the function type. Thus, as illustrated in FIG. 4, the external device may be determined by follows. For each function type, a preset communication protocol type is determined from the communication protocol types corresponding to the function type (corresponding to an action at block 401). The external device for outputting the media data corresponding to the function type is determined according to an external device identifier corresponding to the preset communication protocol type (corresponding to an action at block 402).

In yet another embodiment, considering historical query situation, a historical query result may be obtained, an external device historically used for transmitting the multimedia data corresponding to the function type is determined as the external device for transmitting the multimedia data corresponding to the function type in this transmission.

A registration process of the external device may be described as follows.

In an embodiment of the present disclosure, when the external device accesses a communication interface of the electronic device through a communication interface of the external device, the two communication interfaces perform a handshake. After the handshake is successful, the external device applies for registration. During registration, the external device sends its own function type and communication protocol type to the electronic device. The registration management module in the electronic device may determine the preset communication protocol type according to the function type of the external device, and then may generate registration information of the external device according to the function type, the preset communication protocol type and the communication protocol type, and stores the registration information in a specified location, such as a specified area of a local memory or a buffer memory.

For example, the external device may be a functional device that is able to produce at least one of visual, auditory, olfactory, tactile and dynamic effects. For example, the external device may be an odor generator. These effects correspond to the functions types of vision, hearing, smell, touch and motion respectively.

In an embodiment of the present disclosure, the preset communication protocol type is determined according to the function type of the registered external device. Common communication protocol types (such as a USB communication protocol type, an infrared communication protocol type, a Bluetooth communication protocol type, etc.) are classified into respective preset communication protocol types. For example, the external device is an odor generator based on USB communication protocol type, then a preset communication protocol type corresponding to the external device is Smell_5D.

In another embodiment, after the external device accesses the communication interface of the electronic device through the communication interface of itself, the registration is performed during the handshake process between the two communication interfaces.

At step 203, the media data corresponding to the function type is packaged according to a communication protocol type of the external device, and the packaged media data is transmitted through a communication interface corresponding to the external device.

In an embodiment of the present disclosure, the multi-dimensional media data to be transmitted may be obtained from the main control module, and the multi-dimensional media data to be transmitted may be packaged according to the communication protocol type to obtain a pack header.

For example, when the communication protocol type is an infrared wireless transmission protocol, the drive module may generate a pack header for the multi-dimensional media data according to the function type, the communication protocol type, and the preset communication protocol type. The pack header may be as follows.

```
                      {Output_Name | Custom_Data | Data_Code | Stop_Bit} ;
```

Where, Output_Name represents the preset communication protocol type; Custom_Data represents a decoding header field of infrared wireless transmission, configured to distinguish different infrared wireless transmission protocols; Data_Code represents the function type, configured to indicate what kind of operation is performed to the multi-dimensional media data, such as audio playback, video playback, or the like. Stop_Bit is an end marker for infrared timing.

For another example, in a case where the communication protocol type is a USB transmission protocol, in response to the communication protocol type, the drive module may generate a pack header based on the communication protocol type and operation instructions of the multi-dimensional media data according to the preset communication protocol type.

Considering that the USB transmission protocol includes token packets, data packets and handshake packets, in an embodiment, the data packets may be packaged, and a format of the pack header may be as follows:

```
                                  { Output_Name | Control_Data} ;
```

Where, Output_Name represents the preset communication protocol type, Control_Data refers to the function type, configured to indicate what kind of operations are performed on the multi-dimensional media data, such as audio playback, video playback, or the like.

It is noted that, the drive module may process the token packets and the handshake packets according to a packaging format specified by the USB transmission protocol, and specific packaging content can be referred to the related art, which is not limited herein.

It is noted that, for other communication protocol types, pack header formats can be set correspondingly to adaptively package the multi-dimensional media data.

In an embodiment of the present disclosure, after adding the pack header to the multi-dimensional media data to be transmitted, the drive module may send the packed multi-dimensional media data to the corresponding communication interface, so as to achieve the effect of sending the multi-dimensional media data to the external device. Since the media data is repackaged according to the communication protocol type of each external device, the external device can use a common interface to realize communication, thereby enabling cross-device transmission of media data. That is, the same media data is sent to external devices of the same function type, which is convenient for extension and system development.

The above embodiment describes a solution in which the electronic device sends the multi-dimensional media data to the external device. In an embodiment, the electronic device may also receive multi-dimensional media data (hereinafter referred to as second data for distinguishing) sent from the external device. For example, when the electronic device receives the packaged second data via the communication interface, the drive module may unpackage the second data. For example, the drive module can obtain a system interface type of the main control module in the electronic device. The system interface type may include at least one of Linux system and Android system. Then, the drive module may unpackage the received second data according to the system interface type to obtain the multi-dimensional media data. Afterwards, the drive module can send the multi-dimensional media data to the main control module, such that the main control module processes the multi-dimensional media data. In this way, the electronic device can be used as a two-way multi-dimensional media data transmission device to realize output and reception of multi-dimensional media data.

It is noted that a data transmission module can be used for outputting multi-dimensional media data, inputting multi-dimensional media data, or inputting and outputting multi-dimensional media data. Correspondingly, the electronic device may have a data output function (such as an image or voice interaction device) only, a data input function (such as touch, motion, and smell device) only, or a data input and output function (such as a visual device). Those skilled in the art can make settings according to specific scenarios, and corresponding solutions fall within the protection scope of the present disclosure.

With the embodiments of the present disclosure, the function types of the multi-dimensional media data to be transmitted are obtained, in which the media data of different dimensions correspond to different function types. The external device for outputting the media data corresponding to the function type is determined. The media data corresponding to the function type is packaged according to the communication protocol type of the electronic device and then transmitted through the communication interface corresponding to the external device. In the embodiment, the media data is packaged according to the communication protocol type of the external device, and the media data of various dimensions is transmitted, which is beneficial to use a common interface to transmit the multi-dimensional media data, and convenient for extending the external device, such as sharing hardware resources or developing upper layer application software, thus a good open-source software and hardware ecological environment is established.

A multi-dimensional media data transmission method provided by an embodiment of the present disclosure will be described in the following in combination with a specific scenario. As illustrated in FIG. 5, a registration management module is set in an electronic device. An external device registers with the registration management module through a driver layer in the electronic device. At this time, the driver layer can add a data structure to store a function type of the external device: function_type. Certainly, a data structure can also be added to the external device to store a function type of the external device. It may be understood that the above function type needs to be consistent with a function type in a preset communication protocol type.

When a user triggers an application, a system upper framework layer may obtain the function types of the media data of respective dimensions in the multi-dimensional media data, and may query the registration management module (namely, a register manager) through a broadcast way to obtain an available external device list. Then, the data packets are packaged respectively according to the communication protocol type (USB, IR, Bluetooth (BT), WiFi) corresponding to each external device in the external device list, and the packaged data is transmitted to a corresponding communication interface through the driver layer, and then sent to a corresponding external device by the communication interface.

It is noted that, in the embodiment, the multi-dimensional media data may be of a cross-device type, and broadcast instructions are sent to all the external devices that meet the function type. The driver layer packages and transmits the media data for each type of communication interfaces. In other words, the media data of the same function type may be sent to all external devices of this function type at the same time, that is, external devices of the same function type operate simultaneously.

Certainly, the driver layer may also add serial numbers for the external devices of the same function type, such as a, b, c, d ..., which is fed back to the framework layer through the driver layer. The framework layer adds a specific serial number for an external device when issuing a function type according to requirements. For example, the serial number may be added after the function type function_type as follows.

```
                               {function_type | device_type | index} ;
```

Where, device_type and index can be default. By default, it means that all external devices of the same function type operate simultaneously.

FIG. 6 is a block diagram of a multi-dimensional media data transmission apparatus according to an exemplary embodiment. As illustrated in FIG. 6, the multi-dimensional media data transmission apparatus includes a function type acquisition module 601, an external device determination module 602, and a media data packaging module 60.

The function type acquisition module 601 is configured to acquire a plurality of function types of multi-dimensional media data to be transmitted, in which the media data of different dimensions correspond to different function types.

The external device determination module 602 is configured to determine an external device for outputting media data corresponding to a function type.

The media data packaging module 603 is configured to package the media data corresponding to the function type according to a communication protocol type of the electronic device and to transmit the packaged media data through a communication interface corresponding to the external device.

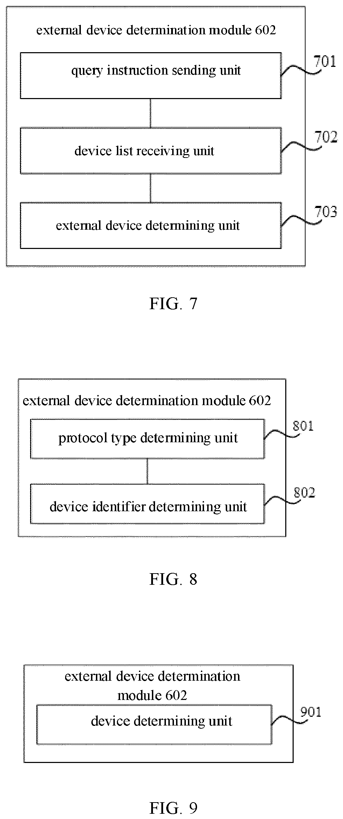

In an embodiment, as illustrated in FIG. 7, the external device determination module 602 includes a query instruction sending unit 701, a device list receiving unit 702, and an external device determining unit 703.

The query instruction sending unit 701 is configured to send an external device query instruction carrying a function type identifier to a registration management module.

The device list receiving unit 702 is configured to receive an external device list feedback by the registration management module based on the function type identifier.

The external device determining unit 703 is configured to determine at least one external device in the external device list as the external device for outputting the media data corresponding to the function type.

The external device for outputting the media data corresponding to the function type is registered with the registration management module in advance.

In an embodiment, as illustrated in FIG. 8, the external device list carries external device identifiers and communication protocol types corresponding to the function type, and the external device determining module 602 includes a protocol type determining unit 801 and a device identifier determining unit 802.

The protocol type determining unit 801 is configured to determine a preset communication protocol type from the communication protocol types corresponding to the function type.

The device identifier determining unit 802 is configured to determine the external device for outputting the media data corresponding to the function type according to an external device identifier corresponding to the preset communication protocol type.

In an embodiment, as illustrated in FIG. 9, the external device determining module 602 includes a device determining unit 901.

The device determining unit 901 is configured to determine an external device historically used for transmitting the multimedia data corresponding to the function type as the external device for transmitting the multimedia data corresponding to the function type in this transmission according to a historical query result.

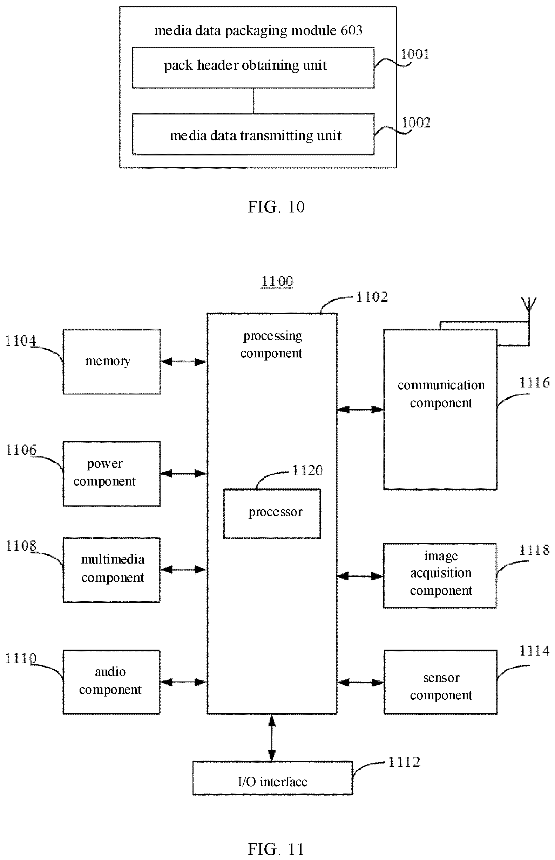

In an embodiment, as illustrated in FIG. 10, the media data packaging module 603 includes a pack header obtaining unit 1001 and a media data transmitting unit 1002.

The pack header obtaining unit 1001 is configured to generate a pack header for the media data according to the function type, the communication protocol type, and a preset communication protocol type.

The media data transmitting unit 1002 is configured to add the pack header to the media data and to transmit the packed media data to the communication interface corresponding to the external device.

With respect to the devices in the above embodiments, the specific manners for performing operations for individual modules therein have been described in detail in the embodiments regarding the method, which will not be described herein.

With the embodiments of the present disclosure, the function types of the multi-dimensional media data to be transmitted are obtained, in which the media data of different dimensions correspond to different function types. The external device for outputting the media data corresponding to the function type is determined. The media data corresponding to the function type is packaged according to the communication protocol type of the electronic device and then transmitted through the communication interface corresponding to the external device. In the embodiment, the media data is packaged according to the communication protocol type of the external device, and the media data of various dimensions is transmitted, which is beneficial to use a common interface to transmit the multi-dimensional media data, and convenient for extending the external device, such as sharing hardware resources or developing upper layer application software, thus a good open source software and hardware ecological environment is established.

FIG. 11 is a block diagram of an electronic device according to an exemplary embodiment. For example, the electronic device 1100 may be a smart phone, a computer, a digital broadcasting terminal, a tablet device, a medical device, a fitness device, a personal digital assistant, and the like.

As illustrated in FIG. 11, the electronic device 800 may include one or more of the following components: a processing component 1102, a memory 1104, a power component 1106, a multimedia component 1108, an audio component 1110, an input/output (I/O) interface 1112, and a sensor component 1114, a communication component 1116, and an image acquisition component 1118.

The processing component 1102 typically controls overall operations of the electronic device 1100, such as the operations associated with display, telephone calls, data communications, camera operations, and recording operations. The processing component 1102 may include one or more processors 1120 to execute instructions to perform all or part of the steps in the above described methods. Moreover, the processing component 1102 may include one or more modules which facilitate the interaction between the processing component 1102 and other components. For instance, the processing component 1102 may include a multimedia module to facilitate the interaction between the multimedia component 1108 and the processing component 1102.

The memory 1104 is configured to store various types of data to support the operation of the electronic device 1100. Examples of such data include instructions for any applications or methods operated on the electronic device 1100, contact data, phonebook data, messages, pictures, video, etc. The memory 1104 may be implemented using any type of volatile or non-volatile memory devices, or a combination thereof, such as a static random access memory (SRAM), an electrically erasable programmable read-only memory (EEPROM), an erasable programmable read-only memory (EPROM), a programmable read-only memory (PROM), a read-only memory (ROM), a magnetic memory, a flash memory, a magnetic or optical disk.

The power component 1106 provides power to various components of the electronic device 1100. The power component 1106 may include a power management system, one or more power sources, and any other components associated with the generation, management, and distribution of power in the electronic device 1100.

The multimedia component 1108 includes a screen providing an output interface between the electronic device 1100 and a target object. In some embodiments, the screen may include a liquid crystal display (LCD) and a touch panel (TP). If the screen includes the touch panel, the screen may be implemented as a touch screen to receive input signals from the target object. The touch panel includes one or more touch sensors to sense touches, swipes, and gestures on the touch panel. The touch sensors may not only sense a boundary of a touch or swipe action, but also sense a period of time and a pressure associated with the touch or swipe action.

The audio component 1110 is configured to output and/or input audio signals. For example, the audio component 1110 includes a microphone ("MIC") configured to receive an external audio signal when the electronic device 1100 is in an operation mode, such as a call mode, a recording mode, and a multi-dimensional media data transmission mode. The received audio signal may be further stored in the memory 1104 or transmitted via the communication component 1116. In some embodiments, the audio component 1110 further includes a speaker to output audio signals.

The I/O interface 1112 provides an interface between the processing component 1102 and peripheral interface modules, such as a keyboard, a click wheel, buttons, and the like.

The sensor component 1114 includes one or more sensors to provide status assessments of various aspects of the electronic device 1100. For instance, the sensor component 1114 may detect an open/closed status of the electronic device 1100, relative positioning of components, e.g., the display and the keypad, of the electronic device 1100, a change in position of the electronic device 1100 or a component of the electronic device 1100, a presence or absence of target object contact with the electronic device 1100, an orientation or an acceleration/deceleration of the electronic device 1100, and a change in temperature of the electronic device 1100.

The communication component 1116 is configured to facilitate communication, wired or wirelessly, between the electronic device 1100 and other devices. The electronic device 1100 can access a wireless network based on a communication standard, such as WiFi, 2G, 3G, 4G, 5G, or a combination thereof. In one exemplary embodiment, the communication component 1116 receives a broadcast signal or broadcast associated information from an external broadcast management system via a broadcast channel. In one exemplary embodiment, the communication component 1116 further includes a near field communication (NFC) module to facilitate short-range communications. For example, the NFC module may be implemented based on a radio frequency identification (RFID) technology, an infrared data association (IrDA) technology, an ultra-wideband (UWB) technology, a Bluetooth (BT) technology, and other technologies.

In exemplary embodiments, the electronic device 1100 may be implemented with one or more application specific integrated circuits (ASICs), digital signal processors (DSPs), digital signal processing devices (DSPDs), programmable logic devices (PLDs), field programmable gate arrays (FPGAs), controllers, micro-controllers, microprocessors, or other electronic components, for performing the above described methods.

In exemplary embodiments, there is also provided a non-transitory computer readable storage medium including instructions, such as included in the memory 1104, executable by the processor 1120 in the electronic device 1100, for performing the above-described methods. For example, the non-transitory computer-readable storage medium may be a ROM, a RAM, a CD-ROM, a magnetic tape, a floppy disc, an optical data storage device, and the like.

Other embodiments of the present disclosure will be apparent to those skilled in the art from consideration of the specification and practice of the present disclosure disclosed here. This application is intended to cover any variations, uses, or adaptations of the present disclosure following the general principles thereof and including such departures from the present disclosure as come within known or customary practice in the art. It is intended that the specification and examples be considered as examples only, with the scope of the invention being defined by the following claims.

It will be appreciated that the present disclosure is not limited to the exact construction that has been described above and illustrated in the accompanying drawings. It is intended that the scope of the invention only be limited by the appended claims.

## Claims

1. A multi-dimensional media data transmission method, comprising:
acquiring (201) a plurality of function types of multi-dimensional media data to be transmitted, wherein the media data of different dimensions correspond to different function types;
determining (202) an external device for outputting media data corresponding to a function type; and
packaging (203) the media data corresponding to the function type according to a communication protocol type of the external device, and transmitting the packaged media data through a communication interface corresponding to the external device.

2. The method according to claim 1, wherein determining (202) the external device for outputting the media data corresponding to the function type, comprises:
sending (301) an external device query instruction carrying a function type identifier to a registration management module;
receiving (302) an external device list feedback by the registration management module based on the function type identifier;
determining (303) at least one external device in the external device list as the external device for outputting the media data corresponding to the function type; wherein
the external device for outputting the media data corresponding to the function type is registered with the registration management module in advance.

3. The method according to claim 2, wherein the external device list carries external device identifiers and communication protocol types corresponding to the function type; and
determining (202) the external device for outputting the media data corresponding to the function type, comprises:
determining (401) a preset communication protocol type from the communication protocol types corresponding to the function type; and
determining (402) the external device for outputting the media data corresponding to the function type according to an external device identifier corresponding to the preset communication protocol type.

4. The method according to claim 1, 2 or 3, wherein determining (202) the external device for outputting the media data corresponding to the function type, comprises:
determining an external device historically used for transmitting the multimedia data corresponding to the function type as the external device for transmitting the multimedia data corresponding to the function type in this transmission according to a historical query result.

5. The method according to any one of claims 1 to 4, wherein packaging (203) the media data corresponding to the function type according to the communication protocol type of the external device, comprises:
generating a pack header for the media data according to the function type, the communication protocol type, and a preset communication protocol type; and
adding the pack header to the media data corresponding to the function type, and transmitting the packed media data to the communication interface corresponding to the external device.

6. A multi-dimensional media data transmission apparatus, comprising:
a function type acquisition module (601), configured to acquire a plurality of function types of multi-dimensional media data to be transmitted, wherein the media data of different dimensions correspond to different function types;
an external device determination module (602), configured to determine an external device for outputting media data corresponding to a function type; and
a media data packaging module (603), configured to package the media data corresponding to the function type according to a communication protocol type of the electronic device, and to transmit the packaged media data through a communication interface corresponding to the external device.

7. The apparatus according to claim 6, wherein the external device determination module (602), comprises:
a query instruction sending unit (701), configured to send an external device query instruction carrying a function type identifier to a registration management module;
a device list receiving unit (702), configured to receive an external device list feedback by the registration management module based on the function type identifier;
an external device determining unit (703), configured to determine at least one external device in the external device list as the external device for outputting the media data corresponding to the function type; wherein
the external device for outputting the media data corresponding to the function type is registered with the registration management module in advance.

8. The apparatus according to claim 7, wherein the external device list carries external device identifiers and communication protocol types corresponding to the function type; and the external device determination module (602) comprises:
a protocol type determining (801) unit, configured to determine a preset communication protocol type from the communication protocol types corresponding to the function type; and
a device identifier determining unit (802), configured to determine the external device for outputting the media data corresponding to the function type according to an external device identifier corresponding to the preset communication protocol type.

9. The apparatus according to claim 6, wherein the external device determination module (602) comprises:
a device determining unit (901), configured to determine an external device historically used for transmitting the multimedia data corresponding to the function type as the external device for transmitting the multimedia data corresponding to the function type in this transmission according to a historical query result.

10. The apparatus according to any one of claims 6 to 9, wherein the media data packaging module (603) comprises:
a pack header obtaining unit (1001), configured to generate a pack header for the media data according to the function type, the communication protocol type, and a preset communication protocol type; and
a media data transmitting unit (1002), configured to add the pack header to the media data and to transmit the packed media data to the communication interface corresponding to the external device.

11. A readable storage medium, having executable instructions stored thereon that, when executed by a processor, implement the method according to any one of claims 1 to 5.

## Amended claims

### Amended claims in accordance with Rule 137(2) EPC.

1. A multi-dimensional media data transmission method, comprising:
acquiring (201) a plurality of function types of multi-dimensional media data to be transmitted, wherein the media data of different dimensions correspond to different function types, wherein the function types comprise at least one of vision, hearing, smell, touch and motion;
determining (202) an external device for outputting media data corresponding to a function type; and
packaging (203) the media data corresponding to the function type according to a communication protocol type of the external device, and transmitting the packaged media data through a communication interface corresponding to the external device.

2. The method according to claim 1, wherein determining (202) the external device for outputting the media data corresponding to the function type, comprises:
sending (301) an external device query instruction carrying a function type identifier to a registration management module;
receiving (302) an external device list feedback by the registration management module based on the function type identifier;
determining (303) at least one external device in the external device list as the external device for outputting the media data corresponding to the function type; wherein
the external device for outputting the media data corresponding to the function type is registered with the registration management module in advance.

3. The method according to claim 2, wherein the external device list carries external device identifiers and communication protocol types corresponding to the function type; and
determining (202) the external device for outputting the media data corresponding to the function type, comprises:
determining (401) a preset communication protocol type from the communication protocol types corresponding to the function type; and
determining (402) the external device for outputting the media data corresponding to the function type according to an external device identifier corresponding to the preset communication protocol type.

4. The method according to claim 1, 2 or 3, wherein determining (202) the external device for outputting the media data corresponding to the function type, comprises:
determining an external device historically used for transmitting the multimedia data corresponding to the function type as the external device for transmitting the multimedia data corresponding to the function type in this transmission according to a historical query result.

5. The method according to any one of claims 1 to 4, wherein packaging (203) the media data corresponding to the function type according to the communication protocol type of the external device, comprises:
generating a pack header for the media data according to the function type, the communication protocol type, and a preset communication protocol type; and
adding the pack header to the media data corresponding to the function type, and transmitting the packed media data to the communication interface corresponding to the external device.

6. A multi-dimensional media data transmission apparatus, comprising:
a function type acquisition module (601), configured to acquire a plurality of function types of multi-dimensional media data to be transmitted, wherein the media data of different dimensions correspond to different function types, wherein the function types comprise at least one of vision, hearing, smell, touch and motion;
an external device determination module (602), configured to determine an external device for outputting media data corresponding to a function type; and
a media data packaging module (603), configured to package the media data corresponding to the function type according to a communication protocol type of the electronic device, and to transmit the packaged media data through a communication interface corresponding to the external device.

7. The apparatus according to claim 6, wherein the external device determination module (602), comprises:
a query instruction sending unit (701), configured to send an external device query instruction carrying a function type identifier to a registration management module;
a device list receiving unit (702), configured to receive an external device list feedback by the registration management module based on the function type identifier;
an external device determining unit (703), configured to determine at least one external device in the external device list as the external device for outputting the media data corresponding to the function type; wherein
the external device for outputting the media data corresponding to the function type is registered with the registration management module in advance.

8. The apparatus according to claim 7, wherein the external device list carries external device identifiers and communication protocol types corresponding to the function type; and the external device determination module (602) comprises:
a protocol type determining (801) unit, configured to determine a preset communication protocol type from the communication protocol types corresponding to the function type; and
a device identifier determining unit (802), configured to determine the external device for outputting the media data corresponding to the function type according to an external device identifier corresponding to the preset communication protocol type.

9. The apparatus according to claim 6, wherein the external device determination module (602) comprises:
a device determining unit (901), configured to determine an external device historically used for transmitting the multimedia data corresponding to the function type as the external device for transmitting the multimedia data corresponding to the function type in this transmission according to a historical query result.

10. The apparatus according to any one of claims 6 to 9, wherein the media data packaging module (603) comprises:
a pack header obtaining unit (1001), configured to generate a pack header for the media data according to the function type, the communication protocol type, and a preset communication protocol type; and
a media data transmitting unit (1002), configured to add the pack header to the media data and to transmit the packed media data to the communication interface corresponding to the external device.

11. A readable storage medium, having executable instructions stored thereon that, when executed by a processor, implement the method according to any one of claims 1 to 5.
